(19) Europäisches Patentamt
European Patent Office
Office européen des brevets

(11) Publication number: 0 027 721
A1

(12) # EUROPEAN PATENT APPLICATION

(21) Application number: 80303660.7

(22) Date of filing: 16.10.80

(51) Int. Cl.³: C 08 F 214/22
C 08 F 214/18, C 08 F 2/38
C 08 J 3/24
//(C08F214/22, 214/18),
(C08F214/18, 214/22)

(30) Priority: 17.10.79 JP 134476 79

(43) Date of publication of application:
29.04.81 Bulletin 81/17

(84) Designated Contracting States:
DE FR GB IT

(71) Applicant: Daikin Kogyo Co., Ltd.
No 1-12-39, Umeda Kita-ku
Osaka-shi Osaka-fu(JP)

(72) Inventor: Tatemoto, Masayoshi
No.2-4-18, Hanazono
Ibaraki Osaka(JP)

(72) Inventor: Morita, Shigeru
c/o Kofuryo, 2-21-21 Hitotsuya
Settsu Osaka(JP)

(74) Representative: Allard, Susan Joyce et al,
BOULT, WADE & TENNANT 27 Furnival street
London EC4A 1PQ(GB)

(54) **Liquid fluorine-containing polymer and a process for the production thereof.**

(57) A process for producing a readily crosslinkable liquid fluorine-containing polymer having a narrow molecular weight range distribution and containing iodine in the molecule in an amount of from 1 to 30% by weight based on the weight of the polymer, which process comprises polymerizing vinylidene fluoride and at least one other fluoroolefin in the presence of a radical producing source and an iodinated compound of the formula: Rf.Ix wherein Rf is a saturated perfluorocarbon group, a saturated perfluorochlorocarbon group or a saturated fluorohydrocarbon group and *x* is an integer at least 1 corresponding to the bonding valency of Rf, whilst maintaining the proportion of the mole number of the monomeric components (M) to the mole number of the iodinated compound (I) in the range of from 10 to 1,200.

EP 0 027 721 A1

# LIQUID FLUORINE-CONTAINING POLYMER AND A PROCESS FOR THE PRODUCTION THEREOF

The present invention relates to a liquid fluorine-containing polymer and to a process for the production thereof. More particularly, it relates to a readily cross-linkable liquid fluorine-containing polymer having a certain amount of iodine in the molecule and a narrow molecular weight range distribution, and its production by the polymerization of vinylidene fluoride with at least one other fluoroolefin in the presence of an iodinated compound and a radical-producing source.

A cross-linkable fluorine-containing polymer having a certain amount of iodine in the molecule and its production are disclosed in Japanese Patent Publication (unexamined No. 125,491/78. We have now found that the selection of certain specific conditions in the polymerization can afford easily and efficiently a readily crosslinkable liquid fluorine-containing polymer having a relatively low molecular weight and a relatively narrow molecular weight range distribution.

According to the present invention, there is provided a process for preparing a readily crosslinkable liquid fluorine-containing polymer having a narrow molecular weight range distribution and containing iodine in the molecule in an amount of from 1 to 30% by weight

based on the weight of the polymer which process comprises polymerizing vinylidene fluoride with one or more other fluoroolefins in the presence of an iodinated compound of the formula: $RF.I_x$ wherein Rf is a saturated perfluorocarbon group, a saturated perfluorochlorocarbon group or a saturated fluorochlorohydrocarbon group and x is an integer of at least one corresponding to the bonding valency of the group Rf and a radical-producing source, whilst maintaining the proportion of the mole number of the monomeric components (M) to the mole number of the iodinated compound (I) in the polymerization system in the range of from 10 to 1200.

The polymerization in the process of the invention may be carried out by any conventional polymerization procedure, such as bulk polymerization, solution polymerization, suspension polymerization or emulsion polymerization. In view of easiness of the control of the reaction conditions and attainment of better polymer yields, emulsion polymerization is the most preferred.

One of the monomeric components to be subjected to polymerization is vinylidene fluoride. The amount of vinylidene fluoride is usually from 10 to 90 mole %, preferably from 40 to 80 mole % based on the monomeric components. When the amount is from 40 to 80 mole %, the polymer so-produced is sufficiently and satisfactorily elastomeric on crosslinking.

The other monomeric component to be polymerized with the vinylidene fluoride is any other fluoroolefin, of which examples are as follows: tetrafluoroethylene, trifluoroethylene, vinyl fluoride, chlorotrifluoroethylene, hexafluoropropylene, pentafluoropropylene, perfluorocyclobutylene, perfluoro(methyl vinyl ether), perfluoro(ethyl vinyl ether) and perfluoro(propyl vinyl ether).

The iodinated compound may be one having one or more iodine atoms which does not enter into any side reactions under the polymerization conditions to lose its effectiveness. The group Rf in the iodinated compound may be a saturated perfluorocarbon group, a saturated perfluorochlorocarbon group or a saturated fluoro-chlorohydrocarbon group, each bearing optionally one or more functional groups (e.g. -O-, -S-, Rf-N=-,-COOH, $-SO_3H$, $-PO_3H$) and preferably having 1 to 8 carbon atoms. Further the carbon atoms to which the iodine atom is bonded preferably has at least one fluorine atom or at least one perfluorocarbon group, particularly so that the remaining bonds of such carbon atom bear only the fluorine atom(s) and/or the perfluorocarbon atom(s). In view of easy availability, iodinated compounds having one or two iodine atoms are commonly used.

Examples of the iodinated compound are monoiodoperfluoromethane, monoiodoperfluoroethane, monoiodoperfluoropropane, monoiodoperfluorobutane (e.g. 2-iodoperfluorobutane, 1-iodoperfluoro(1,1-dimethylethane), monoiodoperfluoropentane (e.g. 1-iodoperfluoro(4-methylbutane),

1-iodoperfluoro-n-nonane, monoiodoperfluorocyclobutane, 2-iodoperfluoro(1-cyclobutyl)ethane, monoiodoperfluorocyclohexane, monoiodotrifluorocyclobutane, monoiododifluoromethane, monoiodomonofluoromethane, 2-iodo-1- hydroperfluoroethane, 3-iodo-1-hydroperfluoropropane, monoiodomonochlorodifluoromethane, monoiododichloromonofluoromethane, 2-iodo-1,2-dichloro-1,1,2-trifluoroethane, 4-iodo-1,2-dichloroperfluorobutane, 6-iodo-2-dichloroperfluorohexane, 4-iodo-1,2,4-trichloroperfluorobutane, 1-iodo-2,2-dihydroperfluoropropane, 1-iodo-2-hydroperfluoropropane, monoiodotrifluoroethylene, 3-iodoperfluoropropene-1,4-iodoperfluoropentene-1, 4-iodo-5-chloroperfluoropentene-1,2-iodoperfluoro (1-cyclobutenyl)ethane, 1,3-diiodoperfluoro-n-propane, 1,4-diiodoperfluoro-n-butane, 1,3-d-diiodo-2-chloroperfluoro-n-propane, 1,5-diiodo-2,4-dichloroperfluoro-n-pentane, 1,7-diiodoperfluoro-n-octane, 1,2-di(iododifluoromethyl)perfluorocyclobutane, 2-iodo-1,1,1,-trifluoroethane,1-iodo-1-hydroperfluoro(2-methylethane),2-iodo-2,2-dichloro-1,1,1-trifluoroethane, 2-iodo-2-chloro-1,1,1-trifluoroethane, 2-iodoperfluoroethyl perfluorovinyl ether, 2-iodoperfluoroethyl perfluoroisopropyl ether, 3-iodo-2-chloroperfluorobutyl perfluoromethyl thioether and 3-iodo-4-chloroperfluorobutyric acid. These iodinated compounds are obtainable by conventional procedures; for example, 2-iodoperfluoropropane can be obtained by reacting hexafluorpropene with iodine in the presence of potassium fluoride; 1,5-diiodo-2,4-dichloroperfluoro-*n*-pentane can be obtained by reacting a silver salt of 3,5-dichloroperfluoro-1,7-heptanedioic acid with iodine; 4-iodo-5-chloroperfluoro-1-pentane can be obtained by reacting perfluoro-1,4-pentadiene with iodine chloride.

The bond between the carbon atom and the iodine atom in the iodinated compound is relatively weak and readily cleaved in the presence of a radical-producing source to produce a radical, having a reactivity so high that the addition growth reaction proceeds. This addition growth reaction is terminated by drawing the iodine atom from the iodinated compound, whereby the desired fluorine-containing polymer containing an iodine atom bonded to the carbon atom at the terminal position of the polymeric chain and having a narrow molecular weight distribution range is obtained.

The M/I proportion in the polymerization system is required to be maintained in the range of from 10 to 1200, preferably from 10 to 300. When the ratio is less than 10, the polymerization hardly proceeds. When it is more than 1200, the molecular weight distribution of the produced polymer becomes broad. Depending on the polymerization procedure, the M/I proportion may be somewhat changed; for example, it may be from 50 to 1200 for bulk polymerization and from 10 to 400 for emulsion polymerization.

As the radical-producing source, light or heat are preferably used. The light may be in the infrared to ultraviolet region, but not chemical ultraviolet rays which may produce a radical from a bond other than the bond between the carbon atom and the iodine atom. As the heat, a temperature of not lower than 100°C, preferably not lower than 200°C may be used. Ionizing rays may also be used but they are not favourable because they produce radicals not only from the bond between a carbon atom and an iodine atom but also from other bonds. Depending on the polymerization procedure, radical initiators such as organic or inorganic peroxides, azo compounds, organic metal compounds and metals may be employed. Particularly preferred radical initiators are persulfates, hydrogen peroxide, $(Rf'CO)_2O_2$, Rf'OORf', $(Rf')_3COOC(O)OC(Rf')_3$, $N_2F_2$, Rf'-N=N-Rf', $HgRf'_2$, Li, K, Na, Mg, Zn, Hg, Al, etc., Rf' being a polyfluoroalkyl group.

The temperature for the polymerization may be selected appropriately within the range in which a radical reaction proceeds but the thermal decomposition of the polymeric chain as produced does not take place and is usually from -20 to 150°C. The pressure on polymerization is of no limitation and may be autogenic.

For solution polymerization, a solvent may be used which prevents chain transfer. Specific examples of

suitable solvents are: 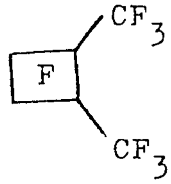, $CF_2ClCF_2Cl$, $CF_2ClCFCl_2$,

$H(CF_2)_nH$ 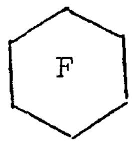, $CF_3O(C_2F_4O)_nCF_2CF_3$, $N(C_4F_9)$, etc.

For emulsion polymerization, an emulsifier is normally employed. When the polymer itself exerts a surface active effect and, for example, has a hydrophilic group such as -COOM, -OH or $-SO_3M$ (M being a cation such as hydrogen or metal), the use of an emulsifier is not necessarily required. As the emulsifier, a fluorine-containing surfactant such as a salt of a fluorine-containing carboxylic acid or a fluorine-containing sulfonic acid may be used. The amount of the emulsifier is usually not more than 5% by weight based on the weight of water. If desired, a chain transfer agent may be employed, although it does not normally afford a favourable result.

The fluorine-containing polymer prepared by the process of this invention is usually in the liquid state at a temperature of from 0 to 150°C and preferably has a number average molecular weight of from 900 to 10,000. When the molecular weight is above 10,000, a polymer having a narrow molecular weight range distribution tends to be hardly obtainable. Preferably, the proportion of the

weight average molecular weight ($\overline{M}w$) to the number average molecular weight ($\overline{M}n$) is from 1.05 to 1.30.

The amount of iodine in the polymer molecule varies with the molecular weight of the polymer and is usually not less than 1% by weight and not more than 30% by weight based on the weight of the polymer. A preferred range is from 2 to 20% by weight. When the amount of iodine is less than 1% by weight, a polymer having a narrow molecular weight range distribution is hardly obtained. When the amount of iodine is above 30% by weight, the polymerization hardly proceeds and the polymer so-produced is inferior in heat resistance and other physical properties. The number of iodine atom(s) in each molecule of the polymer may be 1 or more but should not be so great as to make the amount of iodine abovr 30% bywweight.

The iodine in the molecule of the polymer so-produced means the iodine atom(s) bonded to the carbon atom(s) in the polymeric chain. Usually, the iodine atom(s) are bonded only to the carbon atom(s) present at the terminal position(s) in the polymeric chain, but it sometimes happens that the iodine atoms are bonded to both the carbon atom(s) at the terminal position(s) and the carbon atom(s) at an other position(s). The iodine atom(s) bonded to the carbon atom(s) at the terminal position(s) can contribute in crosslinking, which renders the polymer readily curable.

The polymer has units of vinylidene fluoride in an amount of from 10 to 90 mole % and can be crosslinked in the presence of a crosslinking source. Since the molecular weight distribution of the polymer is extremely narrow, the viscosity is relatively low so that the polymer can be easily handled or processed in comparison with other polymers having the same average molecular weight but having a broader molecular weight distribution.

Furthermore, the molecular weight of the polymer is almost uniform, and therefore the macromolecular polymer obtained by crosslinking the polymer has an even structure and has excellent physical and chemical properties. Moreover, the iodine atom at the terminal position is quite reactive so that a reactive functional group, such as -COOH, -OH or 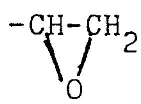, can be introduced with ease for modification of the properties of the polymer.

The polymer has an iodine atom at the terminal position. This terminal iodine atom may be substituted with an other atom or an atomic group by a per se conventional reaction for enhancement of the stability or reactivity of the polymer. For example, the iodine atom in the polymer may be substituted with an atom such as hydrogen, fluorine, chlorine or bromine or an atomic group such as alkyl, thioalkyl, silyl or fluorine-containing alkyl by reaction with a reactive compound having such an atom or atomic group.

Furthermore, for example, the polymer may be added to a compound having a polymerizable unsaturated bond, such as allyl alcohol, α-methylstyrene, diallyl phthalate or tetraallyl pyromellitate. Furthermore, for example, the addition product may be subjected to coupling or the elimination of hydrogen iodide from the polymer may be carried out.

The crosslinking of the polymer can be accomplished by various crosslinking procedures, such as peroxide crosslinking to be effected in the presence of a polyfunctional olefin in an amount equivalent to the terminal iodine atom, hydrolysis crosslinking by hydrolysis of the reaction product with vinyl triethoxysilane and crosslinking of epoxy linkages formed by the addition of allyl alcohol and hydrogen iodide elimination.

As the source for initiating the crosslinking, radio-active rays such as γ rays, electron rays, α rays, β rays and X rays may be used as well as ultraviolet rays. As the crosslinking agent, organic peroxides, polyamines, polyhydroxy compounds and polythiols, etc. may be used.

The organic peroxide is preferably one which can readily produce a peroxy radical in the presence of heat or an oxidation-reduction system. Specific examples are 1,1-bis(*t*-butylperoxy-3,5,5-trimethylcyclohexane, 2,5-dimethylhexane-2,4-dihydroxyperoxide, di-*t*-butyl peroxide,

t-butylcumyl peroxide, dicumyl peroxide, α,α'-bis(t-butylperoxy)-p-diisopropylbenzene, 2,5-dimethyl-2,5-di(t-butylperoxy)hexane, 2-5-dimethyl-2,5-di(t-butylperoxy)hexane-3, benzoylperoxide, t-butylperoxybenzene, 2,5-dimethyl-2,5-di(benzoylperoxy)hexane, t-butylperoxymaleic acid and, t-butyl-peroxiisopropyl carbonate. From these, an appropriate organic peroxide in a suitable amount may be chosen depending upon the amount of -O-O-, the decomposition temperature, etc.

When using an organic peroxide, the combined use of a crosslinking aid or a co-crosslinking agent produces a remarkable effect. As the crosslinking aid or the co-crosslinking agent, one may be used which is reactive to a peroxy radical and a polymer radical. Specific examples are triallyl cyanurate, triallyl isocyanurate, triacryl formal, triallyl trimellitate, N,N'-m-phenylenedismaleimide, dipropargyl terephthalate, diallyl phthalate and tetraallyl terephthalate.

As the polyamine, a primary or secondary amine having not less than two basic nitrogen atoms in the molecule may be used. In most cases, the polyamide is employed in the form of a salt in order to make the reactivity mild. Examples are alkylenediamines, and particularly, ethylenediamine carbamate, hexamethylenediamine carbamate and 4,4'-diaminocyclohexylmethane carbamate are frequently

employed. The Schiff's base of N,N'-dicynnamylidene-1,6-hexamethylenediamine is also often employed. When a weakly basic polyamine such as a polyamine aromatic compound is employed, it may be used in combination with an other basic compound such as diphenylguanidine, di-O-triguanidine, diphenylthiourea or 2-mercaptoimidazoline. A compound having $-NH_2$ or -NH- in the molecule and being used as a promotor for synthetic rubber or a divalent metal hydroxide, may also be used as the basic compound.

Examples of the polyhydroxy compound are polyhydroxy compounds having an enol thpe hydroxyl group (=C-OH), dihydroxy compounds of the formula: $Rf''(CH_2OH)_2$ wherein Rf" is a polyfluoroalkylene group having from 1 to 20 carbon atoms or a perchlorofluoroalkylene group having from 1 to 20 carbon atoms. They may be employed in free form or salt form (e.g. as alkali metal salts). Specific examples of the polyhydroxy compound are hydroquinone, 2,2-bis(4-hydroxyphenyl)propane, 2,2-bis(4-hydroxyphenyl)perfluoropropane, 2,2-bis(4-hydroxphenyl)butane, 1,1-bis(4-hydroxyphenyl)methane, 4,4'-dihydroxydiphenyl ether, $HOCH_2(CF_2)_3CH_2OH$, $HOCH_2CF_2CFH(CF_2)_3CFHCF_2CH_2OH$, $HOCH_2CH_2CH_2(CF_2)_3CH_2CH_2CH_2OH$, and $HOCH_2CF_2CH_2(CF_2)_3CH_2CF_2CH_2OH$. The alkali metal salts thereof may also be used.

The polythiol compound is usually an aliphatic or aromatic dithiols, of which specific examples are dimercaptodimethyl ether, dimercaptomethyl sulfide,

1,6-hexanedithiol, ethylenebismercaptoacetate, 1,5-naphthalenedithiol and 4,4'-dimercaptodiphenyl. Their alkali metal salts may also be used.

Crosslinking of the polymer may be effected in the presence of a divalent metal oxide or hydroxide as an acid acceptor in addition to a crosslinking source. As the divalent metal oxide or hydroxide, oxides and hydroxides of calcium, magnesium, lead or zinc may be employed.

The complex salts of these oxides and hydroxides may also be used. They are effective not only as acid acceptors but also in enhancing crosslinking the mechanical properties and heat resistance.

Tertiary amines, tri-substitued amidines or pentasubstituted guanidines, as well as their salts with organic or inorganic acids, their quaternary ammonium salts or their quaternary phosphonium salts, may be used as crosslinking promoters. These crosslinking promotors are disclosed in Japanese Patent Publications (unexamined) Nos. 56854/1976, 1387/1972, and 191/1972. Moreover, monovalent metal salts (e.g. Na, K,Ag,Cu) of weak acids may be employed for the purpose of deiodination of the polymer of the invention.

In addition, other additives such as pigments, fillers, reinforcing materials, etc. may be incorporated. Examples of the fillers or the reinforcing materials include inorganic materials such as carbon black, titanium oxide, silica, clay and talc and organic materials

such as polytetrafluoroethylene, polyvinylidene fluoride, polyvinyl fluoride, polychlorotrifluoroethylene, tetrafluoroethylene/ethylene copolymer and tetrafluoroethylene/vinylidene fluoride copolymer.

In order to mix the above materials together for the preparation of a crosslinkable composition comprising the polymer of the invention, there may be adopted per se conventional mixing procedures depending upon the viscosity or physical state of the polymer. For example, a mixer, conventionally employed for liquid rubbers may be used.

The crosslinked polymer is per se useful as a components for paints, adhesives, sealants, etc. due to its excellent heat resistance, oil resistance, chemical resistance and solvent resistance.

Practical embodiments of the invention are illustratively shown in the following Examples wherein part(s) and % are by weight unless otherwise indicated.

Example 1

A 3,200 ml volume stainless steel made autoclave equipped with an agitator was flushed with hexafluoropropylene (HFP), and a solution of trichloroperfluorohexanoyl peroxide (DLP) in trichlorotrifluoroethane (0.43 g/ml) (0.8 ml), 1,4-diiodoperfluorobutane (4FDI) (45.5 g) and HFP (1700 g) were charged therein at 23°C. Then, vinylidene fluoride (VdF) (600 g) was introduced into the autoclave, whereby the polymerization proceeded gradually with depression of the inner pressure. After 24 hours, the same DLP solution as above (0.8 ml) was added thereto under pressure. The reaction was further continued for 43 hours, and then the inner pressure was released, whereby a colorless, transparent liquid (243 g) was obtained. The M/I proportion in the polymerization system was about 208. The produced polymer had an iodine content of 6.84 % by weight. The GPC (gel permeation chromatography) (column, each of $10^7$, $10^6$, $10^5$, $10^4$, $10^3$ and $10^2$; room temperature; manufactured by Water Associates) measured on the tetrahydrofuran solution gave a pattern (Curve 1) as shown in Fig. 1 of the accompanying drawings. The number average molecular weight ($\bar{M}n$) calculated from the GPC pattern was 3,300, and the ratio of the weight average molecular weight ($\bar{M}w$) to the number average molecular weight ($\bar{M}n$) was 1.27.

The reaction conditions and the obtained results as above are summarized in Table 1.

The produced polymer (100 parts) was incorporated with diisopropyl peroxydicarbonate (1.2 parts) and triallyl isocyanurate (7.0 parts), and the resultant mixture was subjected to crosslinking at 100°C for 30 minutes. The polymer before crosslinking was readily soluble in a large amount of acetone at room temperature, while the cured product was insoluble.

Comparative Example 1

The polymerization was carried out as in Example 1 but using the amounts of the iodinated compound and the peroxide and adopting the polymerization time as shown in Table 1. The results are shown in Table 1, and the GPC pattern (Curve 1') of the product is shown in Fig. 1.

Example 2

Into a 3,200 ml volume stainless steel made autoclave equipped with an agitator, water (1,490 ml) was charged, and the inner atmosphere was replaced by HFP. 4FDI (52 g) was introduced into the autoclave, and a mixture of VdF and HFP in a molar ratio of 45 : 55 was pressurized therein at 80°C to make an inner pressure of 16 $kg/cm^2G$. A solution of ammonium persulfate (APS) (0.2 g) in water (10 ml) was added to the autoclave, whereby the polymerization proceeded gradually with depression of the inner pressure. When the inner pressure was lowered to 14 $kg/cm^2G$, a mixture of VdF and HFP in a molar ratio of 78 : 22 was introduced

into the autoclave to make an inner pressure of 16 $kg/cm^2G$. With repetition of the above operation, the reaction was continued for 4.1 hours, during which APS (0.2 g) was added to the polymerization system after 3 hours from the start of the polymerization. The M/I proportion in the polymerization system was about 10.7. The product was a white aqueous dispersion, which was coagulated on freezing to give a liquid rubber (102 g). The iodine content was 26.4 %. The GPC pattern (Curve 2) was as shown in Fig. 2. $\bar{M}n$ determined from the GPC pattern was 903, and $\bar{M}w/\bar{M}n$ was 1.19. $n_D^{25}$ = 1.3945. Viscosity at 50°C, 94 cps.

Examples 3 - 6

The polymerization was carried out as in Example 2 but using the amount of the iodinated compound, effecting the additional introduction of APS (0.1 to 0.2 g per 3 hours) and adopting the polymerization time as shown in Table 2. The results are shown in Table 2. The GPC pattern of the product is shown in Fig. 2, wherein Curves 3 to 6 correspond to the products in Examples 3 to 6.

Comparative Example 2

Into a 3,000 ml volume stainless steel made autoclave equipped with an agitator, water (1,500 ml) was charged, and ammonium perfluorooctanoate (7.5 g) was added thereto. The inner atmosphere was replaced by a mixture of VdF and HFP in a molar ratio of 45 : 55 to make an inner pressure of 14 $kg/cm^2G$. APS (5 mg) was dissolved in water and added to the autoclave. The polymerization was carried

out while stirring at 80°C under a pressure between 13 and 14 kg/cm$^2$G. $I(CF_2CF_2)_2I$ (0.5 ml) was introduced therein at 25°C, and APS (20 mg) dissolved in water (10 ml) was added thereto, whereby the polymerization started immediately with depression of the inner pressure. When the pressure was lowered to 13 kg/cm$^2$G, a mixture of VdF and HFP in a molar ratio of 78 : 22 was introduced therein to make a pressure of 15 kg/cm$^2$G. With repetition of the above operation, the polymerization was continued under a pressure of 13 to 15 kg/cm$^2$G. After 22 hours, the temperature was rapidly lowered, and the pressure was released, whereby the polymerization was interrupted. APS (20 mg) dissolved in water (10 ml) was added to the polymerization system after 7 and 14 hours from the start of the polymerization, but the polymerization rate was almost constant without material acceleration. The M/I proportion in the polymerization system was about 1.4. The produced dispersion having a solid content of 20 % was coagulated with 1 % aqueous solution of potassium alum, and the coagulated product was collected, washed with water and dried to give a rubbery polymer, of which $\bar{M}n$ was 140,000 (determined by GPC). The iodine content of the polymer was 0.18 %. The GPC pattern (Curve 2') was as shown in Fig. 2.

Table 1

| Example | 4FDI (g) | DLP solution *2) (ml x times) | Polymerization time (Hr) | M/I | Yield (g) | Iodine content (%) | $\bar{M}n$ *1) | $\bar{M}w/\bar{M}n$ | $n_D^{25}$ |
|---|---|---|---|---|---|---|---|---|---|
| 1 | 45.5 | 0.8 x 2 | 67 | 208 | 243 | 6.84 | 3300 | 1.27 | 1.3736 |
| Comparative 1 | 15 | 0.8 x 2 | 101 | 629 | 228 | 2.30 | 12000 | 1.69 | - |

Note: *1) determined by GPC method; *2) 0.43 g/ml.

Table 2

| Example | 4FDI (g) | APS (g x times) | Polymerization time (Hr) | M/I | Yield (g) | Iodine content (%) | $\bar{M}n$ | $\bar{M}w/\bar{M}n$ | $n_D^{25}$ |
|---|---|---|---|---|---|---|---|---|---|
| 2 | 52.0 | 0.2 x 2 | 4.1 | 10.7 | 102 | 26.4 | 903 *2) | 1.19 | 1.3945 |
| 3 | 27.1 | 0.2 x 2 | 4.7 | 20.4 | 84.4 | 18.0 | 1390 *2) | 1.17 | 1.3859 |
| 4 | 18.5 | 0.2 x 2 | 5.75 | 30.0 | 80.4 | 11.3 | 2120 *2) | 1.16 | 1.3778 |
| 5 | 45.4 | 0.2 x 2<br>0.1 x 3 | 14 | 12.2 | 317 | 7.22 | 3330 *1) | 1.21 | 1.3749 |
| 6 | 34.1 | 0.2 x 2<br>0.1 x 3 | 17.7 | 16.3 | 410 | 4.56 | 5420 *1) | 1.30 | 1.3732 |

Note: *1) determined by GPC method; *2) determined by VOP (vapor pressure osmometry) method.

CLAIMS

1. A process for producing a readily crosslinkable liquid fluorine-containing polymer having a narrow molecular weight range distribution and containing iodine in the molecule in an amount of from 1 to 30% by weight based on the weight of the polymer, which process comprises polymerizing vinylidene fluoride and at least one other fluoroolefin in the presence of a radical-producing source and an iodinated compound of the formula: $Rf.I_x$ wherein Rf is a saturated perfluorocarbon group, a saturated perfluorochlorocarbon group or a saturated fluorochlorohydro-carbon group and x is an integer at least 1 corresponding to the bonding valency of Rf, whilst maintaining the proportion of the mole number of monomeric components (M) to the mole number of the iodinated compound (I) in the range of from 10 to 1.200.

2. A process as claimed in claim 1 wherein Rf has fluorine atom(s) and/or perfluorocarbon group(s) on all the remaining bonds of the carbon atom to which an iodine atom is bonded.

3. A process as claimed in claim 1 or claim 2 wherein the other fluoroolefin is tetrafluoroolefin, chlorotrifluoro-olefin, trifluoroethylene, vinyl fluoride,

hexafluoro-propylene, pentafluoropropylene perfluoro(methyl) vinyl ether), perfluoro(ethyl vinyl ether) or perfluoro(Propyl vinyl ether).

4. A process as claimed in claim 3 wherein the other fluoroolefin is hexafluorpropylene or a mixture thereof with tetrafluoroethylene.

5. A process as claimed in any one of the preceding claims wherein the M/I proportion is in the range of from 10 to 300.

6. A process as claimed in any one of claims 1 to 3 wherein <u>x</u> is an integer of 1 or 2.

7. A process as claimed in any one of the preceding claims wherein the polymer contains units of vinylidene fluoride in an amount of from 10 to 90 mole %.

8. A process as claimed in any one of the preceding claims wherein the polymer contains iodine in the molecule in an amount of from 2 to 20% by weight based on the weight of the polymer.

9. A process as claimed in any one of the preceding claims wherein the polymer is in the liquid state at a temperature of from 0 to 150°C.

10. A process as claimed in any one of the preceding claims wherein the polymer has a number average molecular weight of 900 to 10,000.

11. A process as claimed in any one of the preceding claims wherein the polymer has a ratio of weight average molecular weight ($\overline{M}w$) to number average molecular weight ($\overline{M}n$) of 1.05 to 1.30.

12. A readily crosslinkable liquid fluorine-containing polymer whenever produced by the process claimed in any one of the preceding claims.

13. A readily crosslinkable composition, which comprises the polymer claimed in claim 12 and at least one crosslinking agent.

SJA/EA 278

0027721

1/2

FIG. 1.

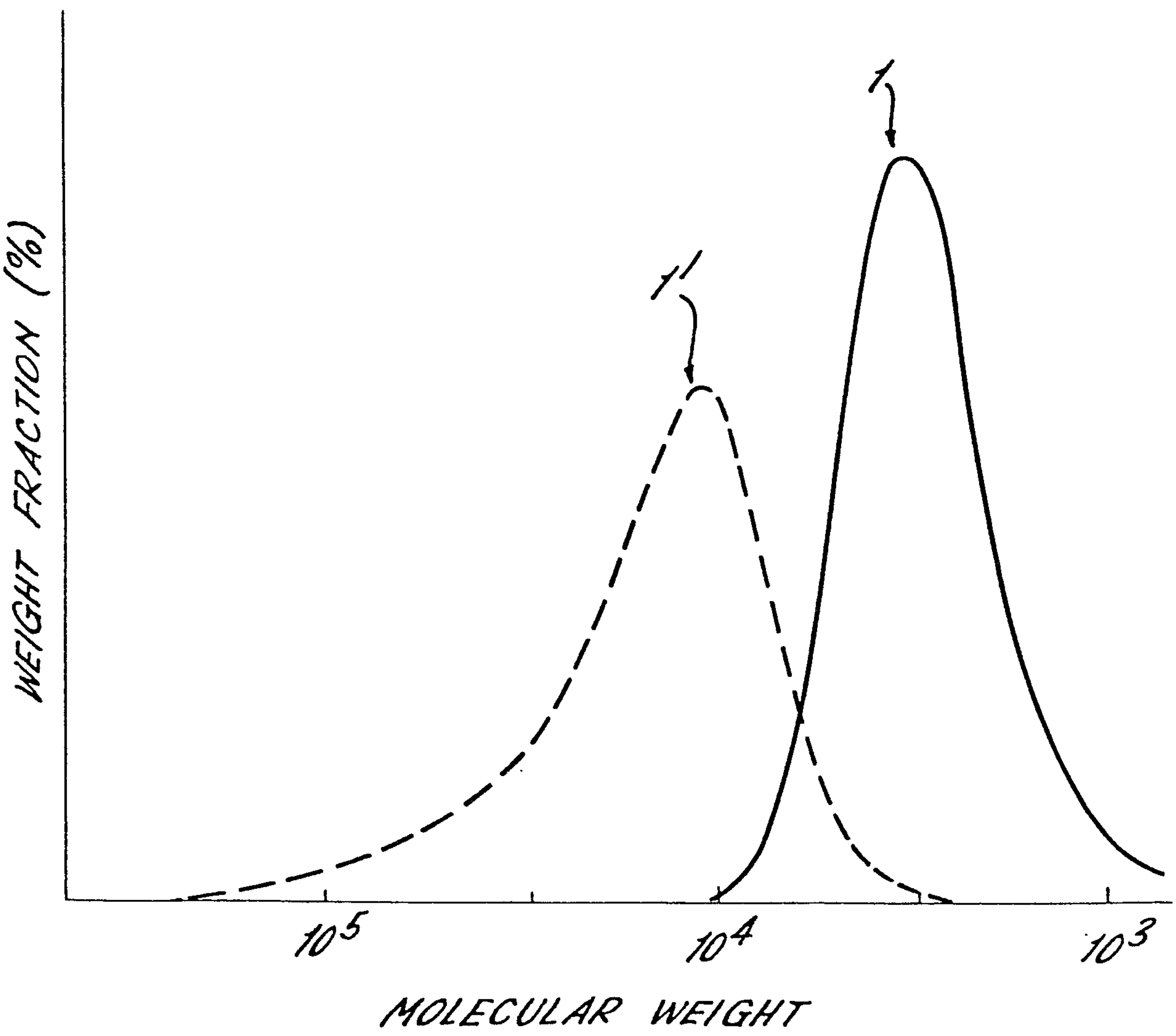

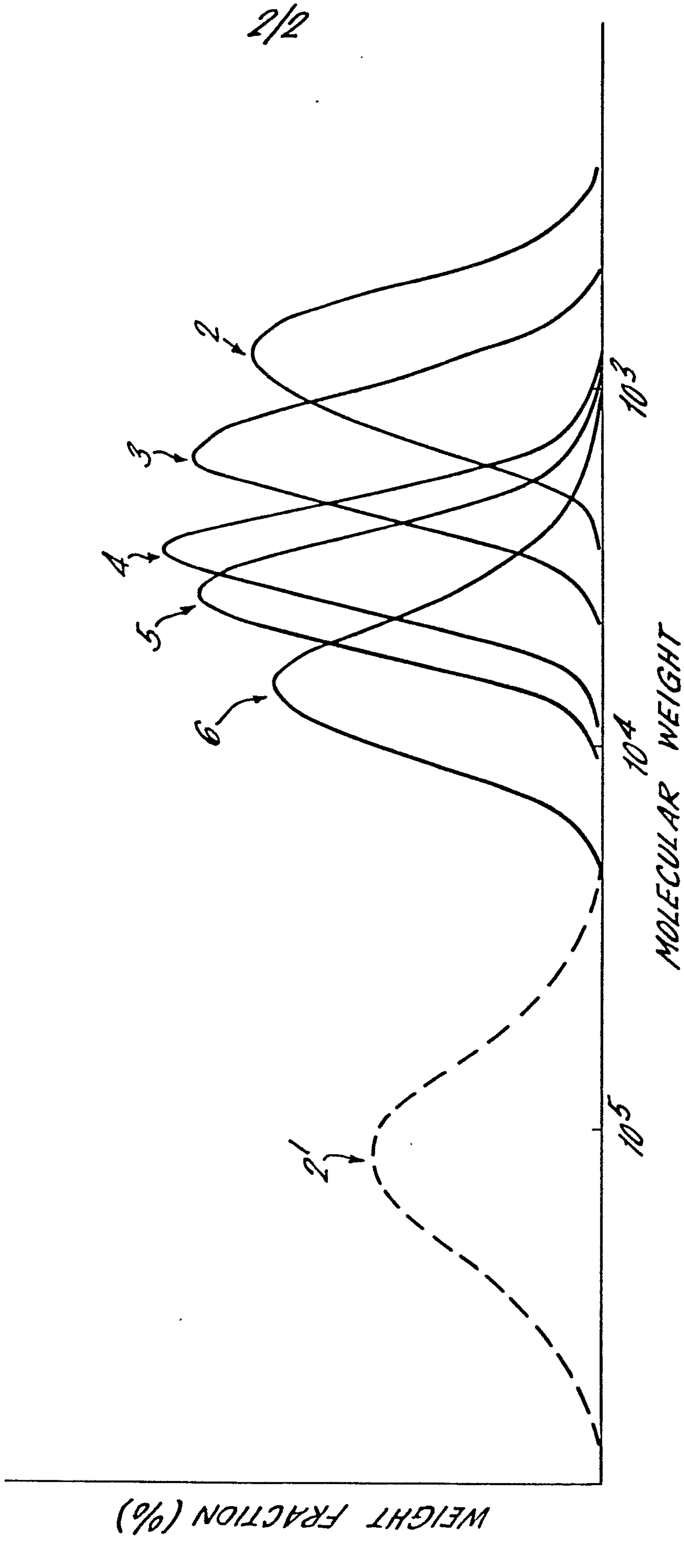


FIG. 2.

0027721

European Patent Office

# EUROPEAN SEARCH REPORT

Application number
EP 80 30 3660

| Category | Citation of document with indication, where appropriate, of relevant passages | Relevant to claim | CLASSIFICATION OF THE APPLICATION (Int. Cl.3) |
|---|---|---|---|
| X | US - A - 3 091 648 (MURRAY HAUPT-SCHEIN & MILTON BRAID)<br>* Claims; column 3, lines 54-73; column 4, lines 14-40; 65-73; column 5, line 21; example 1, in particular (b); example 6, in particular (f); example 19, in particular (d); example 21, in particular (e),(f); example 23, in particular (e) *<br>-- | 1-10, 12 | C 08 F 214/22<br>214/18<br>2/38<br>C 08 J 3/24//<br>(C 08 F 214/22<br>214/18)<br>(C 08 F 214/18<br>214/22) |
| | FR - A - 2 386 561 (DAIKIN KOGYO CO., LTD.)<br>* Claims 1,8-14; page 3, lines 20-37; page 4, lines 1-4; 24-27 * | 1-6, 12,13 | TECHNICAL FIELDS SEARCHED (Int. Cl.3)<br>C 08 F 14/22<br>214/22<br>14/18<br>214/18<br>2/38<br>C 07 C 17/26 |
| D | & JP - A - 78 125 491<br>---- | | |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons
&: member of the same patent family, corresponding document

The present search report has been drawn up for all claims

| Place of search | Date of completion of the search | Examiner |
|---|---|---|
| The Hague | 14-01-1981 | ALMOND |